# EUROPÄISCHE PATENTANMELDUNG

(11) **EP 0 688 658 A2**
(43) Veröffentlichungstag der Anmeldung: **27.12.1995**
(21) Anmeldenummer: 95109749.2
(22) Anmeldetag: 22.06.1995
(51) Int. Cl.: B29C 49/18, B29C 49/48, B29C 49/42

(54) **Verfahren und Vorrichtung zur Herstellung von Flachflaschen**

(30) Priorität: 22.06.1994 DE 4421780
(71) Anmelder: FISCHER, Rainer, D-34414 Warburg (DE)
(72) Erfinder: FISCHER, Rainer, D-34414 Warburg (DE)
(74) Vertreter: Prietsch, Reiner, Dipl.-Ing.

(57) **Zusammenfassung**

Flachflaschen mit geringer, im wesentlichen konstanter Wandstärke lassen sich unter Einhaltung enger Toleranzen auch aus Kunststoffen niedriger Schmelzesteifigkeit im Extrusionsblasverfahren herstellen, wenn der nach bekannten Verfahren erzeugte Zwischenformling zumindest während des Überführens aus der Zwischenform in die Endblasform von unten unterstützt wird. Eine Extrusionsblasmaschine zur Durchführung des Verfahrens hat ein zusätzliches, bewegliches Formteil, das den Zwischenformling während der Übergabe aus der Zwischenform in die Endblasform zumindest zeitweise von unten abstützt. Dieses Formteil kann seinerseits längs einer Vertikalebene teilbar sein.

## Beschreibung

Die Erfindung betrifft ein Verfahren und eine Vorrichtung zur Herstellung von Flachflaschen, die weitgehend frei von Quetschnähten sind und zumindest im Körperbereich eine im wesentlichen konstante Wandstärke haben.

Aus der US-PS 3 892 829 sind ein Verfahren und eine Vorrichtung zur Herstellung von Flachflaschen aus einem extrudierten Schlauch bekannt, der in einer Zwischenform vorgeblasen und erst dann in eine Endblasform übergeben wird, deren Formnest die Kontur der herzustellenden Flachflasche hat.

Aus der DE-OS 37 02 844 sind ein diesem Prinzip folgendes Verfahren und eine danach arbeitende Extrusionsblasmaschine bekannt. Dabei wird ein Kunststoffschlauch frei extrudiert, in eine Zwischenform übernommen und dort zu einem rotationssymmetrischen Zwischenformling geblasen. Dieser Zwischenformling, der mithin in jeder Höhe einen kreisförmigen Querschnitt hat, hat näherungsweise bereits die Länge (Höhe) der herzustellenden Flachflasche und weist in seinen Hauptabschnitten (Boden, Körper, Hals) einen Umfang auf, der den entsprechenden Umfängen der Flachflasche mehr oder minder angenähert ist. Letztere wird durch Übergabe des Zwischenformlings in eine Endblasform ausgeformt, wie sie beispielsweise aus der DE-PS 27 20 448 bekannt ist.

Diese Technik der weitgehend abfall- und dementsprechend quetschnahtfreien Herstellung von Flachflaschen mit im wesentlichen uniformer Wandstärke hat sich bewährt. Im Rahmen diesseitiger Untersuchungen und Versuche bei gegebenem Volumen das Flaschenleergewicht aus den bekannten Gründen der Kostenersparnis und der Abfallvermeidung soweit zu senken und somit die Wandstärken soweit zu verringern, wie dies unter Berücksichtigung der erforderlichen Berstfestigkeit und/oder eines ausreichenden Diffusionswiderstandes möglich ist, hat sich gezeigt, daß es dann - insbesondere bei Kunststoffen geringer Schmelzesteifigkeit - zunehmend schwieriger wird, Flachflaschen mit engen Maßtoleranzen herzustellen.

Diesseits wurde festgestellt, daß ursächlich hierfür die Phase der Übergabe des Zwischenformlings von der Zwischenform zu der Endblasform ist, während derer der Zwischenformling sich noch im Zustand der plastischen/elastischen Verformbarkeit befindet und lediglich an seinem Hals- und Mündungsbereich von einer Blaspinole oder dergleichen gehalten wird. Die Übergabe kann entweder bei stationärer Zwischenform und Endblasform durch Bewegen der Pinole oder, besser, bei stationärer Pinole durch Wegfahren der Zwischenform und Heranfahren der Endblasform erfolgen. Bis dann die Endblasform geschlossen hat, längt sich der Zwischenformling unter seinem Eigengewicht vornehmlich in seinem oberen, unmittelbar an den Hals und die Schulter anschließenden Körperbereich. Obwohl diese Längung nur einen geringen Betrag der Gesamtlänge (bzw. Höhe) des Zwischenformlings ausmacht, führt die in dem sich längenden Bereich eintretende, ebenfalls nur geringfügige Abnahme der Wandstärke dazu, daß in der Endblasform keine hinreichend gleichmäßige Umformung zu einer Flachflasche stattfindet, also die fertige Flachflasche nicht mehr das exakte Positiv des Formnestes der Endblasform ist, sondern vor allem im Schulter- und oberen Körperbereich leichte Konturabweichungen zeigt, die z.B. beim späteren Bedrucken oder Etikettieren Schwierigkeiten bereiten können.

Der Erfindung liegt daher die Aufgabe zugrunde, ein Verfahren und eine Vorrichtung bzw. Extrusionsblasmaschine zu schaffen, die auch Flachflaschen mit geringer Wandstärke und/oder aus Kunststoffen geringer Schmelzesreifigkeit mit eng tolerierten Abmessungen liefern.

Verfahrensmäßig ist diese Aufgabe erfindungsgemäß dadurch gelöst, daß der Zwischenformling zumindest während der Überführung aus der Zwischenform in die Endblasform von unten (mechanisch) unterstützt wird.

Vorrichtungsmäßig ist die genannte Aufgabe dadurch gelöst, daß der Zwischenformling zumindest während der Übergabe aus der Zwischenform in die Endblasform durch ein zusätzliches, bewegliches Formteil abgestützt ist.

Dieses Formteil kann vorteilhaft der Bodenkontur des Zwischenformlings angepaßt sein. In der Regel muß das Formteil in vertikaler Richtung verschiebbar sein, damit das Schließen der Endblasform nicht behindert wird.

Das genannte Formteil kann entweder getrennt von der Zwischenform und der Endblasform vorgesehen sein oder während des Zwischenblasens einen Bestandteil, insbesondere ein Bodenformteil, der Zwischenform bilden.

Im letzteren Fall ist es vorteilhaft, wenn dieses Bodenformteil in der gleichen Ebene wie die Zwischenform längsgeteilt ist und die beiden Bodenformteilhälften analog der Bewegung der Zwischenformhälften auseinander- und zusammenfahrbar sind. Damit die Endblasform den Zwischenformling ungehindert übernehmen kann, sind die Bodenformhälften zusätzlich auch in vertikaler Richtung verfahrbar.

## Patentansprüche

1. Verfahren zur Herstellung von weitgehend quetschnahtfreien Flachflaschen mit im wesentlichen konstanter Wandstärke durch Extrudieren eines thermoplastischen Kunststoffschlauches, anschließendes Blasen des einseitig verschlossenen Schlauches in einer geteilten Zwischenform zu einem Kreisquerschnitt aufweisenden Zwischenformling, sowie Übergeben des Zwischenformlings in eine geteilte Endblasform mit nachfolgendem Blasumformen zu der Flachflasche, **dadurch gekennzeichnet**, daß der Zwischenformling zumindest während des Überführens aus der Zwischenform in die Endblasform von unten unterstützt wird.

2. Verfahren nach Anspruch 1, dadurch gekennzeichnet, daß die Unterstützung des Zwischenformlings auf mechanischem Weg erfolgt.

3. Verfahren nach Anspruch 2, dadurch gekennzeichnet, daß der Zwischenformling bereits in der Zwischenform und während deren Öffnens von unten unterstützt wird.

4. Extrusionsblasmaschine zur Durchführung des Verfahrens nach einem der Ansprüche 1 bis 3, mit einer geteilten Zwischenform und einer geteilten Endblasform, gekennzeichnet durch ein weiteres, bewegliches Formteil, das den Zwischenformling zumindest während der Übergabe aus der Zwischenform in die Endblasform von unten abstützt.

5. Extrusionsblasmaschine nach Anspruch 4, dadurch gekennzeichnet, daß das weitere, bewegliche Formteil in vertikaler Richtung verschiebbar angeordnet ist.

6. Extrusionsblasmaschine nach Anspruch 4 oder 5, dadurch gekennzeichnet, daß das weitere, bewegliche Formteil während des Blasens des Schlauches zu dem Zwischenformling einen Bestandteil des unteren Bereiches der Zwischenform bildet und oberseitig eine Fläche hat, die zumindest teilweise der Bodenkontur des Formnestes der Zwischenform entspricht und bei geschlossener Zwischenform Bestandteil deren Formnestes ist.

7. Extrusionsblasmaschine mach einem der Ansprüche 4 bis 6, dadurch gekennzeichnet, daß das weitere, bewegliche Formteil seinerseits längs einer Vertikalebene, vorzugsweise einer mit der vertikalen Teilungsebene der Zwischenform zusammenfallenden Vertikalebene, teilbar ist.
